Europäisches Patentamt

European Patent Office

Office européen des brevets

(11) Publication number: **0 089 680**
**B1**

(12) **EUROPEAN PATENT SPECIFICATION**

(45) Date of publication of patent specification: **05.07.89**

(21) Application number: **83102845.1**

(22) Date of filing: **22.03.83**

(51) Int. Cl.⁴: **B 65 D 33/00,** B 65 D 33/24,
B 29 D 7/00, B 29 C 55/18

(54) Reclosable container having anti-slip flanges facilitating opening and handling.

| | |
|---|---|
| (30) Priority: **24.03.82 US 361188**<br>**07.03.83 US 470837** | (73) Proprietor: **First Brands Corporation**<br>**39 Old Ridgebury Road, J-1392**<br>**Danbury, CT 06817-0001 (US)** |
| (43) Date of publication of application:<br>**28.09.83 Bulletin 83/39** | (72) Inventor: **Scheibner, Gerald Harry**<br>**1831 Breasted Street**<br>**Downers Grove Illinois 60516 (US)** |
| (45) Publication of the grant of the patent:<br>**05.07.89 Bulletin 89/27** | |
| | (74) Representative: **Schwan, Gerhard, Dipl.-Ing.**<br>**Elfenstrasse 32**<br>**D-8000 München 83 (DE)** |
| (84) Designated Contracting States:<br>**AT BE CH DE FR GB IT LI NL SE** | |
| (56) References cited:<br>**DE-A-3 032 889**<br>**US-A-3 070 278**<br>**US-A-3 502 765**<br>**US-A-4 021 179**<br>**US-A-4 105 491**<br>**US-A-4 306 924** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a reclosable container having a closure fastening device, and more particularly, to such a reclosable container having anti-slip flange grasping surfaces which facilitate deocclusion of the closure fastening device for easier access to the container and to assist the user in holding the container during loading and unloading.

Generally, containers having closure fastening devices . are well known in the art. US—A—4,212,337 describes a type of reclosable container having a closure fastening device which can be improved by the instant invention.

The use of flexible reclosable containers is widespread and such are often used in homes for the storage of various items such as food. It is not uncommon that the opening of an occluded closure fastening device on a container is made somewhat more difficult by the smoothness of the flange grasping surfaces in the vicinity of the opening of the container. This is particularly a problem if the user has slippery fingers as a result of handling greasy food or the like. In addition, difficulty in opening the closure may be aggravated due to limited flange grasping surface areas. Further, such closure fastening devices generally provide a secure, tight interlocking closure on the container making it difficult to deocclude the closure fastening device and open the container. Furthermore, the smoothness of the grasping surfaces near the opening of the container makes it somewhat more difficult to hold the open container during loading and unloading.

Various attempts have been made to overcome the aforementioned difficulties. For example U.S. Reissue Patent US—E—27,174 to Ausnit teaches the use of a raised bead at the edge of one of the flange grasping surfaces at the opening of the container to improve the accessibility to the container opening. This patent, however, neither teaches nor suggests a construction which eliminates the gripping problem, especially for a user with slippery fingers. Additional flange surface area via widening one or more of the flanges would be helpful in opening the container, but such also contributes to the cost of the product. Providing a closure fastening device easier to deocclude would also be helpful in opening the container, but would jeopardize the integrity of the filled container. Therefore, a need exists for providing reclosable containers having interlocking fastening devices which may be opened with greater facility and held more securely while being loaded or unloaded.

US—A—3 070 278 discloses a stiffened header portion for a bag body to provide a header that resists tearing when a hold is placed in the header. This stiffened portion is formed by use of a stiffening coating which, however, is not designed to facilitate deocclusion of a bag closure fastening device.

Further, US—A—4 105 491 discloses an apparatus and a process for preparing a two layer embossed thermoplastic laminate which comprises advancing a first length of thermoplastic film onto a raised, patterned surface of a moving support, advancing the surface at the same rate as the film, impressing the film against the surface of the moving support by nipping the film between the support and a counter-rotating, resilient-surfaced roller, transmitting radiant heat energy to the raised, patterned surface of the moving support supporting the film, advancing a second length of preheated film onto superposed relationship with the film layer impressed upon the raised patterned surface of the moving support by the action of a second counter-rotating roller in nipping engagement with the raised patterned surface of the moving support, and thereafter withdrawing the resulting thermoplastic laminate from the support, wherein air bubbles are encapsulated in a predetermined, patterned configuration between the two layers. The patterned surface of the support likewise is neither designed nor suited to facilitate deocclusion of a closure fastening device.

It is an object of this invention to provide reclosable containers having interlocking fastening devices which may be deoccluded with greater facility, especially when the user has slippery fingers, such as from handling moist or greasy foods.

It is a further object of this invention to provide reclosable containers which may be more firmly held by the user after deocclusion of the fastening device, such as during filling or discharging food products.

These objects, and others, will be more readily apparent from a reading of the following description and viewing the drawings of the invention.

In accordance with the present invention, a container having a reclosable end, comprising respective first and second sidewalls, and a closure fastening device including first and second closure profiles positioned on said respective sidewalls and operable for being occluded and disengaged with respect to each other to close and open said container, each of said sidewalls having a grasping area near the end edge thereof (see e.g. US—A—4,212,337 or US—E—27,174) is characterized in that at least one of said grasping areas has an anti-slip surface, said anti-slip surface comprising an embossed pattern present in the form of between about 0.15 to about 155 embossments per $cm^2$ (about 1 to about 1,000 embossments per square inch) of said anti-slip surface.

By providing such low-slip, high-friction, grasping surfaces on the flange areas of the reclosable containers, opening and holding of the container is enabled with substantially less effort than with containers not so provided. Thus, by providing at least one anti-slip surface of the indicated type on at least one of the grasping areas of the reclosable container, the container is still highly resistant to opening during normal handling while providing the user greater ease in opening and holding the container under adverse handling conditions. The anti-slip surfaces of this invention thus give the user a firmer grip in opening and holding the container. More specifically, the first and second sidewalls of the container are attached to each other along three sides and first and second interlocking closure profiles are located near the edge of the fourth side forming the container opening. The first and second closure profiles may be formed separately and then attached to the container sidewalls or they may be formed integral with the container sidewalls, as disclosed in U.S. Patent No. 4,212,337.

A process for making a container having a reclosable end, respective first and second sidewalls and a closure fastening device including first and second closure profiles positioned on said respective sidewalls and operable for being occluded and disengaged with respect to each other to close and open said container, each of said sidewalls having a grasping area near the end edge thereof, in conformity with the present invention is characterized by providing on at least one grasping area at least one anti-slip surface in the form of an embossed pattern.

The provision of an anti-slip surface on at least one grasping area facilitates closure deocclusion and container handling during filling or discharging.

In conformity with a further aspect of the present invention a process for making a closure fastening device in a closure tape form having flange grasping areas, is characterized in that at least one of said grasping areas is provided with an anti-slip surface by passing said flange grasping area between a non-yielding embossing roller and a roller having a yielding surface, or between a pair of matching rolls having an embossing pattern on their surface.

According to another aspect of the invention a process for making a closure fastening device in a closure tape form having flange grasping areas, is characterized in that at least one of said grasping areas is provided with an anti-slip surface by extruding a closure fastening tape having occludable closure elements and flange areas on both sides of said closure elements, contacting at least one of said flange areas while in a softened condition with a particulate material, and cooling said closure fastening device so that said particulate material is embedded in at least one of said flange grasping areas.

Brief description of the drawings:

Fig. 1 is a perspective view of an opened container in accordance with one embodiment of the invention;

Fig. 2 is a perspective view of an opened container in accordance with another embodiment of the invention;

Fig. 3 is a side elevational view of a typical closure fastening device and, on an enlarged scale, portions of flange grasping areas shown in Fig. 2 treated in accordance with the invention;

Fig. 3A is a side view of a coextrusion die opening showing molten plastic being fed through the middle channel to form the flange grasping area of a container.

Fig. 3B and Fig. 3C are top views of alternative slot extrusion die and annular extrusion die, respectively, that may have a coextrusion die structure as shown in Fig. 3A.

Fig. 4 is a schematic view of an apparatus for practicing one aspect of the invention;

Fig. 5 is an enlarged perspective view of an embossing roller shown in Fig. 4;

Fig. 6 is a perspective view of an embossed portion of a closure fastening device treated with the embossing roller shown in Fig. 5;

Fig. 7 is a side elevational view of a typical closure profile die for the extrusion of a portion of a closure fastening device in accordance with an embodiment of the invention;

Fig. 8 is an end view of the closure profile die depicted in Fig. 7 meeting with a flange forming extrusion die; and

Fig. 9 is a perspective view of part of a closure fastening device partially treated with anti-slip material in accordance with one aspect of the invention.

Description of the preferred embodiments

In one preferred embodiment, the improved reclosable containers with interlocking fastening devices are provided by embossing or engraving at least one of the flange grasping surfaces of the interlocking fastening device. This may be accomplished, for instance, by replacing one of several rubber-covered pull rolls with a non-yielding engraved or embossed roll located downstream of a closure strip cooling means on a typical interlocking closure strip production line. The non-yielding roll or the rubber roll is provided with a groove therein to accommodate the closure profile and avoid damage thereto. In operation, the pressure of the nip action of the pull rolls embosses or engraves the anti-slip pattern into at least one of the flange grasping surfaces that is grasped to open the closure device on the reclosable container. In addition, the flange grasping areas may be embossed or engraved by passing them between a pair of matching rolls having an embossing or engraving pattern on their surface.

Thus, there is provided a zone or area on one or both closure fastening device flange grasping areas which is embossed, i.e., indented, corrugated, engraved, roughened or otherwise altered, to provide a non-slippery surface when grasping the container at its opening. The distortion of the otherwise smooth flange grasping areas may be accomplished in any convenient manner as by embossing the flange area with rolls, or otherwise, before, during or after, construction of the container. The distortions are preferably closely spaced and generally extend substantially perpendicular to the plane of the treated flange area, but should be sufficiently spaced apart so that the strength properties of the flange areas are substantially retained. In forming the afore-described distortions, the individual distortions are spaced from their neighbors and the intervening areas of the flange remain in the initial smooth condition. Such smooth areas constitute a sufficient number so that the strength properties of the distorted flange area are substantially retained.

The distorted flange areas are preferably arranged in parallel rows with criss-crossed parallel rows arranged in diagonal fashion. The distortions provided may have any desired effective size, distribution and density in the range of between about 0.15 to about 155 embossments per cm² about 1 to about 1000 embossments, per squre inch) preferably, about 1.5 to about 15 embossments per cm² (10 to about 100 embossments per square inch) of flange grasping area. The dimensions of the deformed areas of the flange and the depth of the embossments are likewise controlled so as to yield the most effective gripping results. Although not limited to a specific range, best results are generally attained when about seventy-five percent of the flange grasping area is embossed and has embossments having a depth of about 0.6 mm (about 0.025 inch).

In another preferred embodiment of the instant invention, the improved reclosable containers with interlocking fastening devices are provided by placing a layer of an anti-slip material on at least one of the flange grasping areas of the reclosable container that are to be grasped for opening the container. This may be accomplished, for example, by adding an anti-slip material to the extrudate corresponding to the flange grasping areas during extrusion. Alternatively, following extrusion, an anti-slip material may be embedded into this flange grasping area while it is still hot prior to cooling the flange. Still further, after cooling the flange, the flange may be reheated or softened by use of solvents therefore and the flange embedded with an anti-slip material. Further yet, an anti-slip coating may be applied to the flange grasping area. In addition, if desired a colorant such as a pigment or dye or mixture thereof may likewise be employed with the anti-slip material to provide a variety of colors to the treated flange grasping area.

The flange grasping areas of the container may be altered with an anti-slip material by either rendering or maintaining the flange area in a receptive state to provide a slip-resistant surface. Such may be accomplished by spraying or otherwise contacting the anti-slip material with the surface of the flange area of the container by maintaining the particles of anti-slip material above the melting point of the flange area or by maintaining the flange area in a molten state.

The anti-slip material on the surface of the flange grasping area of the container may be in the form of a substantially continuous or discontinuous layer in the sense that the particles may be closely adjacent to each other or they may be distributed in a random fashion.

The anti-slip material employed in this embodiment may be any suitable material. Typical anti-slip materials include granular or powdered calcium carbonate, fine quartz sand, grit, starch, silica, talc, latex, particulated polymers such as polyvinyl chloride, and blended polymers such as polyvinylidene chloride-polyacrylonitrile, or polyvinylidene chloride-polymethyl methacrylate.

The anti-slip material should have a particle size in the range of between about 1 micron and about 50,000 microns, preferably between about 500 microns and 10,000 microns. The anti-slip material also should preferably be a solid, particulate material substantially uniformly applied to at least one surface of the flange grasping area of the container.

The amount of anti-slip material incorporated on the surface of the flange may comprise from between about 0.2 percent to about 50 percent by weight of the altered grasping flange of the container.

The containers and closure fastening devices employed in this invention may be prepared from any suitable packaging material. Typical packaging materials include polymeric materials, preferably those such as polyethylene, polypropylene, polyvinyl chloride, polyvinyl acetate, polyamides, polyvinylidene chloride, and mixtures or copolymers thereof. Where the anti-slip material is applied to the flange grasping area of the closure fastening device while the closure fastening device is in a molten state such as when the fastening device is formed by melt extrusion, the anti-slip material may conveniently be applied to the polymeric material surface before it solidifies on cooling. The particles of anti-slip material become partly embedded in the surface of the polymeric material so that when the polymeric material solidifies, the particles are held in position on the face thereof.

Other preferred embodiments of the present invention feature the sidewalls of the reclosable container being either transparent, translucent or opaque and the grasping flanges being colored to be easily recognized visually with respect to the sidewalls.

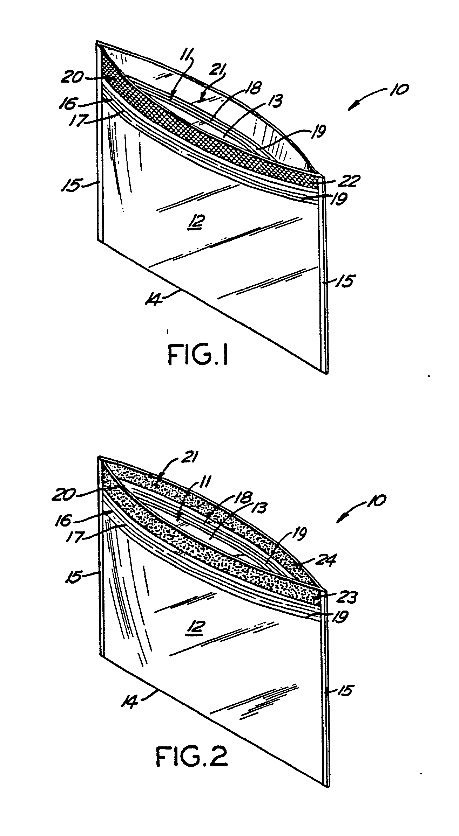

In carrying the invention into effect, several embodiments have been selected for illustration in the accompanying drawings and for description in this specification, reference being had to Figs. 1 to 9.

Fig. 1 shows a perspective view of a container 10 with opening 11. The container 10 has sidewalls 12 and 13 which are typically thin, flexible, transparent plastic film which has been folded along bottom edge 14 and heat sealed along vertical side edges 15 to define a pouch or bag.

The container 10 includes a closure fastening device 16 such as described in the aforementioned US—A—4,212,337. The closure device 16 includes closure profiles 17 and 18 which can be occluded and disengaged with respect to each other for closing and opening the container 10. Closure profiles 17 and 18, in the form of a closure tape are attached to the interior of sidewalls 12 and 13 along sidewall seal areas 19. Container 10 also includes grasping flanges 20 and 21, with a grasping surface 22 on flange 20.

It can be seen from Fig. 1 that the use of transparent sidewalls 12 and 13 results in the visual recognition that there is an altered flange grasping surface 22 on the container 10.

In Fig. 1, an anti-slip flange grasping surface 22 has been provided to grasping flange 20 by passing the flange grasping surface between a pair of rolls at least one of which bears an embossing or engraving pattern on its outer surface.

In Fig. 2, anti-slip flange grasping surfaces 23 and 24 have been provided by adding an anti-slip material to grasping flanges 20 and 21.

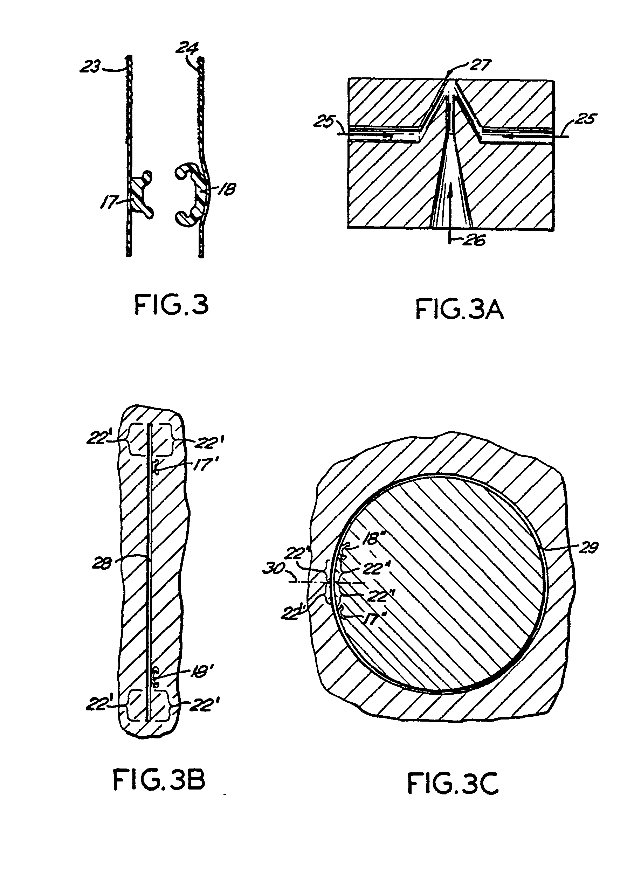

Fig. 3 shows the relative positions of anti-slip grasping outside surface 23 and inside surface 24 shown on Fig. 2 with respect to the closure profiles 17 and 18.

Fig. 3A, 3B and 3C relate to the form of a slot and an annular die either of which can be used to form an integral reclosable container with anti-slip flanges.

In Fig. 3A, anti-slip material from a supply source or reservoir 25 may be coextruded onto both faces of a flange grasping surface emanating from flange grasping material feed inlet 26. The anti-slip material is shown joining the flange grasping material feed just before the die lip 27. However, it may also be merged therewith earlier or right at the lip opening. Fig. 3B depicts a slot die opening used to form integral closure elements on a film or sheet to form a container. As shown therein, slot film die opening 28 extrudes a film or sheet having attached thereto a male closure element formed by opening 17' and a female closure element formed by opening 18', and adjacent to the closure elements are a plurality of die sections 22' which form flange grasping surfaces coated with an anti-slip material. Fig. 3C shows an annular die to form a container wherein annular opening 29 extrudes a film, and openings 17'' and 18'' extrude a male closure element and a female closure element, respectively, and die sections 22'' form a plurality of flange grasping surfaces. After cooling, the extruded film with integral closure elements is slit in the area of the designated section line 30, and employed to form an interlocking closure container stock which is then sever-sealed to form interlocking closure containers.

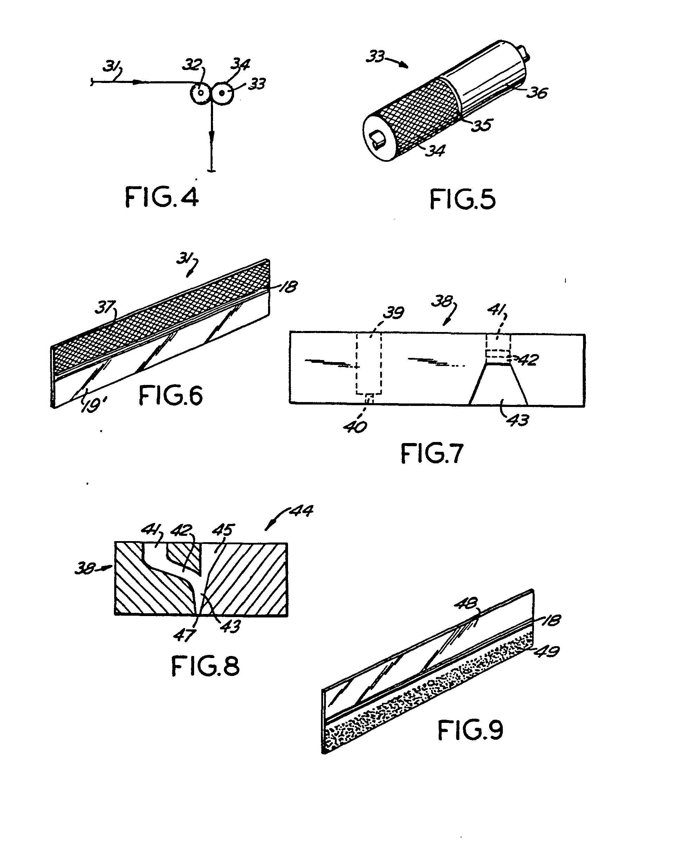

Fig. 4 shows a schematic view of apparatus for continuously embossing or engraving the flange grasping area of part of a closure fastening device or a reclosable container stock. There is shown a reclosable container stock supply 31 (source not shown) or a closure fastening tape supply 31 (source not shown) being fed to the nip of the two pull rollers wherein one roller is a resilient rubber-backed roller 32 and one roller is a non-yielding embossing roller 33 having on its surface an embossing pattern 34 on one portion thereof as shown in Fig. 5. Embossing roller 33 also has a peripheral groove 35, as shown in Fig. 5, located around its circumference to accommodate the closure profile element and to avoid damage to the closure profile. The other portion of the embossing roller is smooth as depicted at surface 36 in Fig. 5. As shown in Fig. 4, container stock supply 31 or tape supply 31 is fed to the nip of rubber-backed roller 32 and embossing roller 33 whereby an embossed pattern is produced on part of reclosable container stock supply 31 or closure fastening tape supply 31. An embossed pattern 37 on closure fastening tape 31 is shown in Fig. 6, and is provided on one side of fastening tape 31. Closure profile 18 and an inner flange area 19' of closure fastening tape 31 are not distorted by the rollers.

As shown in Figure 4, anti-slip flange surface areas are provided by feeding reclosable container stock or closure tape having smooth flange areas, between the nip of a pair of rollers wherein at least one of the rollers bears an embossing or engraving pattern thereon, and one or both rollers have grooves therein to accommodate the occludable profile elements of the interlocking fastener device to thus avoid damaging the occludable elements.

Following the embossing step, the male and female closure elements may be occluded by passing through occlusion rollers and the occluded container stock or closure tape is then directed to a wind-up device for storage, or is directed to further processing equipment.

In Fig. 7 is shown a side elevational view of a melt extrusion die apparatus 38 for the practice of one embodiment of the invention. Polymeric raw material is introduced into a closure profile melt feed reservoir 39 and extruded through a closure shaped flow channel 40. Reservoir 41 is fed with anti-slip material which feeds to transfer channel 42 and then supplies slot combining region 43. In Fig. 8, flange forming die 44 has a feed reservoir 45 for melted polymer to form the closure flange. Reservoir 41 feeds anti-slip material into transfer channel 42 of die 38. In region 43, it is seen that the anti-slip material joins with the closure flange material. On leaving extrusion exit 47, and after cooling, the partial closure tape has one smooth flange side 48 as shown in Fig. 9, a closure profile element 18, and a flange side 49 partly altered with anti-slip material.

As earlier indicated, the improved reclosable containers of this invention are provided with anti-slip flange surface areas for gripping by the user, thereby enabling easier opening and holding of the container. The anti-slip flange surface areas may be provided by embossing or engraving the flange area to be grasped or by placing an anti-slip material on or in the flange area to be grasped for opening the container.

Generally speaking, the anti-slip surfaces should be located above the closure fastening device near the container opening for satisfactory performance in practicing the invention. Preferably, the anti-slip surfaces are located on both inside and outside grasping surfaces of the container opening, although they may be located on just the inside, just the outside, or any combination of the inside and outside grasping surfaces of the container. Further, it is not necessary for all of the flange areas of the grasping surface to have the same corresponding dimensions or the same type flange treatment.

The best mode of embodiment of the invention is as follows: Sidewalls 12 and 13 are clear, flexible polyethylene film and the closure fastening device 16 is the type disclosed in the aforementioned US—A—4,212,337 and as shown in Fig. 1 herein.

Typically, the container 10 width is about 26.8 cm (10 9/16 inches) and the height is about 29.2 cm (11 1/2 inches). The closure fastening device 16 is located about 15.9 mm (5/8 inch) below the top edge of the grasping flanges. The anti-slip surfaces start at about 3.2 mm (1/8 inch) from the closure profiles and extend therefrom, preferably all the way to the flange edge. The anti-slip surfaces are translucent, closure profile 18 is clear, and closure profile 17 is colored blue.

The operation of the container according to the invention is as follows:

A user in the process of opening the container 10 with occluded profiles 17 and 18 can easily separate the top edges of the grasping flanges 20 and 21 by stroking his thumb across the top edges of the grasping flanges. The relatively small spacing between the flange areas enables the user to engage the anti-slip surface as a result of this stroking of the top edges of the grasping flanges. The anti-slip surface results in an excellent gripping surface, even for a user with slippery fingers and where the container is made from a slippery film material. The user proceeds to separate the top edges of the grasping flanges from each other by spreading them apart to disengage the closure profiles 17 and 18 from each other.

The opening of the container 10 involves three operative forces which are of interest. In addition to the spreading force, the user exerts squeezing forces on the anti-slip flange surface 22 to produce frictional forces which will prevent flange 20 from slipping from the user's fingers. In addition, the user exerts squeezing forces on anti-slip flange surface 22 to prevent the container 10 from slipping from the user's fingers when the container 10 is being loaded or unloaded.

The anti-slip flange surface 22 drastically reduces the squeezing forces needed by the user, especially if the user has slippery fingers or where the container is made from a slippery film material.

The containers and closure fastening devices employed in this invention may be prepared by any suitable manufacturing method. For example, each closure fastening device can be manufactured as a strip for subsequent attachment to a film by the use of appropriate means. Typically, a thermoelectric device can be used to apply heat to a film in contact with a closure strip to cause a transfer of heat through the film to produce fusing at the interface of the film and the closure strip. The fusing of the film and the closure strip may also be established by the use of hot melt adhesives, hot air sealing, or other methods such as ultrasonic heating.

However, it is preferred that a method for producing plastic film with occludable closure strips fused thereto be employed as disclosed in my copending European application No. 83 102 844 (filed on March 22nd, 1983 under the same priority date of March 24th, 1982 as the present application and published under EP—A—0 089 679). The operation of said invention, broadly speaking, involves adhering an interlocking closure strip, which is in a non-molten state, to a molten film of thermoplastic material. The process is continuous and employs a slot film casting station and at least one groove lay-on roll. In one embodiment, interlocking closure strips having profile portions and flange portions are fed to lay-on rolls having circumferential grooves therein to accommodate the contours of the profiles of the closure strips. A molten plastic film is extruded onto a rotatable casting cylinder positioned opposite the lay-on rolls so that the plastic film becomes fused to the flange portions of the closure strips, and thereafter the combination of plastic film and closure strips is cooled. The lay-on rolls in this embodiment, are each only as wide as the specific closure strip to be laminated with the molten thermoplastic film, and normally do not contact the molten thermoplastic film. Further, the lamination pressure exerted by the lay-on rolls on the casting cylinder, with the closure strips and molten plastic film therebetween, may be controlled by spacing means such as jacking bolts or air cylinders which prevent damage to the profile portions of the closure strips and the molten plastic film. The casting cylinder is rotated at substantially the same surface speed as the fed closure strips, whereby the closure strips are laminated to the film of molten thermoplastic material cast on the casting cylinder. The combination of closure strips and plastic film is then advanced to further cooling means such as a chill roll.

The afore-described method for providing plastic film with occludable closure strips fused thereto may be employed herein to provide the sidewalls of the container with at least one anti-slip surface such as grasping surface 22 near the end edge of sidewalls 12 and 13, as shown in Fig. 1. The anti-slip surface on said grasping area may be obtained by providing an embossing or engraving pattern on at least one portion of the aforementioned plastic film casting cylinder, feeding preformed interlocking closure strips having profile portions and flange portions to a rotatable circumferentially grooved lay-on roll so that the unoccluded profile portions of the closure strips extend into the grooves of the lay-on roll, extruding a molten plastic film onto the rotatable casting cylinder positioned opposite the lay-on roll so that the molten plastic film fuses to the flange portions of the closure strips, and thereafter cooling the laminated composite of plastic film and closure strips.

The embossing or engraving pattern on at least one portion of the surface of the casting cylinder may be one as earlier discussed and depicted in Fig. 5 for embossing roller 33 at element 34. The other portion of the surface of the casting cylinder can be smooth. In addition, the surface of the casting cylinder may have more than one portion thereof having an embossing or engraving pattern thereon. In any event, as the molten plastic film is extruded onto the casting cylinder having an engraving or embossing surface portion, and as the molten plastic film contacts the closure strips carried by the lay-on roll, pressure contact therebetween fuses the cast molten plastic film to the closure strips and also embosses the opposite surface of the cast film to provide anti-slip grasping areas thereto.

As shown in Fig. 5 herein with respect to embossing roller 33, the engraving or embossing pattern on the surface of the casting cylinder is preferably closely spaced and has intervening smooth areas. The engraving or embossing pattern on the surface of the casting cylinder is likewise preferably arranged with criss-crossed parallel rows in diagonal fashion, and preferably provides from between about 1.5 to about 15 embossments per cm² (about 10 to about 100 embossments per square inch) as depicted on surface 37 in Fig. 6.

The method may also employ slitters to remove trim such as edge beads and to slit the laminate to provide multiple products having closures. For example, a pair of deoccluded interlocking closure strips may be fed into the grooving of a plurality of rubber-covered lay-on rolls which align the strips into the proper lateral positions prior to contact and lamination with the molten cast thermoplastic film. Obviously, any number of such lay-on roll arrangements may be employed on a common shaft.

Various alternatives may be practiced pursuant to this invention. For example, each closure strip portion may be extruded directly, into the area previously described as the lamination area, simultaneously with the cast thermoplastic film while providing appropriate cooling means therefor. These molten plastic streams are combined to form an integral plastic web which is then cooled and processed further. As in the afore-described method, the casting cylinder may be provided with an embossing or engraving pattern on a portion of its surface and produce an anti-slip surface to a grasping area of the ultimate container. Preferably, at least a portion of the casting cylinder has a matted, textured, embossed, or engraved surface to provide the desired anti-slip grasping areas for the reclosable container. The container stock may also be fed directly to a container forming/cut-off mechanism such as a bag-making machine.

Containers prepared in accordance with this invention may be used in the packaging and storing of a variety of products. Moisture-containing comestibles including fruit such as apples, pears, peaches, plums, tomatoes; meats; vegetables such as carrots, peas and string beans may be conveniently packaged and maintained in sanitary condition in such containers.

## Claims

1. A container having a reclosable end, comprising respective first and second sidewalls (12, 13), and a closure fastening device (16) including first and second closure profiles (17, 18) positioned on said respective sidewalls and operable for being occluded and disengaged with respect to each other to close and open said container (10), each of said sidewalls (12, 13) having a grasping area (20, 21) near the end edge thereof, characterized in that at least one of said grasping areas (20, 21) has an anti-slip surface (22, 23, 24), said anti-slip surface comprising an embossed pattern (37) present in the form of between about 0.15 to about 155 embossments per cm² (about 1 to about 1,000 embossments per square inch) of said anti-slip surface.

2. The container of claim 1 wherein said closure profiles (17, 18) are each connected to the surface of a closure tape attached to said respective sidewalls (12, 13).

3. The container of claim 2 wherein said closure tapes are colinearly positioned with and attached near the edges of the reclosable end of said container (10).

4. The container of claim 1 wherein said embossed pattern (37) has been provided by passing said grasping area (20, 21) between a non-yielding embossing roller (33) and a roller (32) having a yielding surface.

5. The container of claim 1 wherein said embossed pattern (37) has been provided by passing said grasping area (20, 21) between a pair of matching rolls (32, 33) having an embossing pattern (34) on their surface.

6. The container of any one of the preceding claims wherein said embossments have a depth of about 0.6 mm (0.025 inch).

7. The container of any one of the preceding claims wherein said embossed pattern (37) is present in the form of between about 1.5 to about 15 embossments per cm² (about 10 to about 100 embossments per square inch) of said anti-slip surface (22, 23, 24).

8. A process for making a container (10) according to any one of claims 1 to 7 having a reclosable end, respective first and second sidewalls (12, 13) and a closure fastening device (16) including first and second closure profiles (17, 18) positioned on said respective sidewalls and operable for being occluded and disengaged with respect to each other to close and open said container, each of said sidewalls (12, 13) having a grasping area (20, 21) near the end edge thereof, characterized by providing on at least one grasping area (20, 21) at least one anti-slip surface (22, 23, 24) in the form of an embossed pattern (37).

9. The process of claim 8 wherein said anti-slip surface (22, 23, 24) is provided by passing said grasping area (20, 21) between a non-yielding embossing roller (33) and a roller (32) having a yielding surface.

10. The process of claim 8 wherein said anti-slip surface (22, 23, 24) is provided by passing said grasping area (20, 21) between a pair of matching rolls having an embossing pattern on their surface.

11. The process of claim 8 wherein said anti-slip surface (22, 23, 24) is provided by advancing occludable closure strips having profile portions (17, 18) and flange portions (20, 21) to at least one rotatable circumferentially grooved lay-on roll so that unoccluded profile portions of said closure strips extend into the grooves of said lay-on roll, extruding a molten plastic film onto a rotatable casting cylinder having an embossing pattern on at least one portion of the surface of said casting cylinder wherein said casting cylinder is positioned opposite said lay-on roll so that said molten plastic film fuses to said flange portions of said closure strips and said molten plastic film is provided with an embossed pattern by applying pressure between said lay-on roll and said casting cylinder, and cooling said plastic film and closure strips.

12. The process of claim 11 including controlling the pressure applied between said lay-on roll and said casting cylinder.

13. The process of claim 8 wherein said anti-slip surface (22, 23, 24) is provided by extruding said first and second closure profiles simultaneously with a thermoplastic film cast onto a rotatable casting cylinder having an embossing pattern on at least one portion of the surface of said casting cylinder, combining said closure profiles and said thermoplastic film so that said thermoplastic film and said closure profiles fuse together and said thermoplastic film is provided with an embossed pattern, and cooling said thermoplastic film and closure profiles.

14. The process of any one of claims 11 to 13 wherein said pattern on the surface of said casting cylinder provides from between about 0.15 to about 155 embossments per cm² (about 1 to about 1000 embossments per square inch).

15. A process for making a closure fastening device (16) for containers according to any one of claims 1 to 7 in a closure tape form having flange grasping areas (20, 21), characterized in that at least one of said grasping areas (20, 21) is provided with an anti-slip surface (22, 23, 24) by passing said flange grasping area (20, 21) between a non-yielding embossing roller (33) and a roller (32) having a yielding surface, or between a pair of matching rolls having an embossing pattern on their surface.

16. A process for making a closure fastening device (16) for containers according to any one of claims 1 to 7 in a closure tape form having flange grasping areas (20, 21), characterized in that at least one of said grasping areas (20, 21) is provided with an anti-slip surface (22, 23, 24) by extruding a closure fastening tape having occludable closure elements (18) and flange areas (48, 49) on both sides of said closure elements, contacting at least one of said flange areas (39) while in a softened condition with a particulate material, and cooling said closure fastening device so that said particulate material is embedded in at least one of said flange grasping areas (49).

**Patentansprüche**

1. Behälter mit einem wiederverschließbaren Ende, der eine erste und eine zweite Seitenwand (12, 13) sowie eine Druckverschlußvorrichtung (16) mit einem ersten und einem zweiten Verschlußprofil (17, 18) aufweist, die auf den betreffenden Seitenwänden angeordnet und betätigbar sind, um in und außer Eingriff miteinander zu kommen und dadurch den Behälter (10) zu schließen und zu öffnen, wobei jede der Seitenwände (12, 13) nahe ihrem Außenrand mit einer Grifffläche (20, 21) versehen ist, dadurch gekennzeichnet, daß mindestens eine der Griffflächen (20, 21) eine Antischlupfoberfläche (22, 23, 24) hat, die ein Prägemuster (37) aufweist, das in Form von etwa 0,15 bis etwa 155 Vertiefungen pro cm² (etwa 1 bis etwa 1000 Vertiefungen pro Quadratzoll) der Antischlupfoberfläche vorliegt.

2. Behälter nach Anspruch 1, wobei die Verschlußprofile (17, 18) jeweils mit der Oberfläche eines Verschlußstreifens verbunden sind, der an den betreffenden Seitenwänden (12, 13) angebracht ist.

3. Behälter nach Anspruch 2, wobei die Verschlußstreifen kolinear zu den Rändern des wiederverschließbaren Endes des Behälters (10) angeordnet und nahe diesen Rändern angebracht sind.

4. Behälter nach Anspruch 1, wobei das Prägemuster (37) dadurch ausgebildet ist, daß die Grifffläche (20, 21) zwischen einer unnachgiebigen Prägewalze (33) und einer Walze (32) mit einer nachgiebigen Oberfläche hindurchgeleitet wird.

5. Behälter nach Anspruch 1, wobei das Prägemuster (37) dadurch ausgebildet ist, daß die Grifffläche (20, 21) zwischen einem Paar von aufeinander abgestimmten Walzen (32, 33) hindurchgeleitet wird, die auf ihrer Oberfläche ein Prägemuster (34) aufweisen.

6. Behälter nach einem der vorhergehenden Ansprüche, wobei die Vertiefungen eine Tiefe von etwa 0,6 mm (0,025 Zoll) haben.

7. Behälter nach einem der vorhergehenden Ansprüche, wobei das Prägemuster (37) in Form von etwa 1,5 bis etwa 15 Vertiefungen pro cm² (etwa 10 bis etwa 100 Vertiefungen pro Quadratzoll) der Antischlupfoberfläche (22, 23, 24) vorliegt.

8. Verfahren zum Herstellen eines Behälters (10) nach einem der Ansprüche 1 bis 7, der ein wiederverschließbares Ende, eine erste und eine zweite Seitenwand (12, 13) sowie eine Druckverschlußvorrichtung (16) mit einem ersten und einem zweiten Verschlußprofil (17, 18) aufweist, die auf den betreffenden Seitenwänden angeordnet und betätigbar sind, um in und außer Eingriff miteinander zu kommen und dadurch den Behälter zu schließen und zu öffnen, wobei jede der Seitenwände (12, 13) nahe ihrem Aussenrand mit einer Grifffläche (20, 21) versehen ist, dadurch gekennzeichnet, daß auf mindestens einer Griffläche (20, 21) mindestens eine Antischlupfoberfläche (22, 23, 24) in Form eines Prägemusters (37) ausgebildet wird.

9. Verfahren nach Anspruch 8, wobei die Antischlupfoberfläche (22, 23, 24) ausgebildet wird, indem die Grifffläche (20, 21) zwischen einer unnachgiebigen Prägewalze (33) und einer Walze (32) mit einer nachgiebigen Oberfläche hindurchgeleitet wird.

10. Verfahren nach Anspruch 8, wobei die Antischlupfoberfläche (22, 23, 24) ausgebildet wird, indem die Grifffläche (20, 21) zwischen einem Paar von aufeinander abgestimmten Walzen hindurchgeleitet wird, die auf ihrer Oberfläche ein Prägemuster aufweisen.

11. Verfahren nach Anspruch 8, wobei die Antischlupfoberfläche (22, 23, 24) ausgebildet wird, indem verschließbare Verschlußstreifen, die Profilteile (17, 18) und Flanschteile (20, 21) aufweisen, zu mindestens einer drehbaren, am Umfang mit Nuten versehenen Auflegewalze so zugeführt werden, daß unverschlossene Profilteile der Verschlußstreifen in die Nuten der Auflegewalze hineinreichen, ein aufgeschmolzener Kunststoffilm auf einen drehbaren Gießzylinder, der ein Prägemuster auf mindestens einem Teil der Gießzylinderoberfläche trägt und der gegenüber der Auflegewalze angeordnet ist, extrudiert wird, so daß der aufgeschmolzene Kunststoffilm mit den Flanschteilen der Verschlußstreifen verschmilzt, und der aufgeschmolzene Kunststoffilm mit einem Prägemuster versehen wird, indem Druck zwischen die Auflegewalze und den Gießzylinder angelegt wird, und indem der Kunststoffilm und die Verschlußstreifen gekühlt werden.

12. Verfahren nach Anspruch 11, wobei der zwischen der Auflegewalze und dem Gießzylinder angelegte Druck gesteuert wird.

13. Verfahren nach Anspruch 8, wobei die Antischlupfoberfläche (22, 23, 24) ausgebildet wird, indem das erste und das zweite Verschlußprofil gleichzeitig mit einem thermoplastischen Film extrudiert werden, der auf einen drehbaren Gießzylinder aufgegossen wird, der ein Prägemuster auf mindestens einem Teil der Gießzylinderoberfläche trägt, indem die Verschlußprofile und der thermoplastische Film derart zusammengebracht werden, daß der thermoplastische Film und die Verschlußprofile miteinander verschmelzen und der thermoplastische Film mit einem Prägemuster versehen wird, und indem der thermoplastische Film und die Verschlußprofile gekühlt werden.

14. Verfahren nach einem der Ansprüche 11 bis 13, wobei das Muster auf der Oberfläche des Gießzylinders für etwa 0,15 bis etwa 155 Vertiefungen pro cm² (etwa 1 bis etwa 1000 Vertiefungen pro Quadratzoll) sorgt.

15. Verfahren zum Herstellen einer Druckverschlußvorrichtung (16) für Behälter nach einem der Ansprüche 1 bis 7 in Form eines mit Flanschgrifflächen (20, 21) versehenen Verschlußstreifens, dadurch gekennzeichnet, daß mindestens eine der Grifflächen (20, 21) mit einer Antischlupfoberfläche (22, 23, 24) versehen wird, indem die Flanschgrifffläche (20, 21) zwischen einer unnachgiebigen Prägewalze (33) und einer Walze (32) mit einer nachgiebigen Oberfläche oder zwischen einem Paar von aufeinander abgestimmten Walzen, die auf ihrer Oberfläche ein Prägemuster aufweisen, hindurchgeleitet wird.

16. Verfahren zum Herstellen einer Druckverschlußvorrichtung (16) für Behälter nach einem der Ansprüche 1 bis 7 in Form eines mit Flanschgrifflächen (20, 21) versehenen Verschlußstreifens, dadurch gekennzeichnet, daß mindestens eine der Grifflächen (20, 21) mit einer Antischlupfoberfläche (22, 23, 24) versehen wird, indem ein Verschlußstreifen extrudiert wird, der verschließbare Verschlußelemente (18) und auf beiden Seiten der Verschlußelemente sitzende Flanschbereiche (48, 49) aufweist, mindestens einer der Flanschbereiche (39), während er sich in erweichtem Zustand befindet, mit einem teilchenförmigen Material in Kontakt gebracht wird, und die Verschlußvorrichtung abgekühlt wird, so daß das teilchenförmige Material in mindestens einem der Flanschgriffbereiche (49) eingebettet wird.

## Revendications

1. Récipient ayant une extrémité refermable, comprenant des première et seconde parois latérales respectives (12, 13), et un dispositif d'attache de fermeture (16) comprenant des premier et second profils de fermeture (17, 18) placés sur lesdites parois latérales respectives et utilisables par emboîtement et séparation, l'un par rapport à l'autre, pour fermer et ouvrir ledit récipient (10), chacune desdites parois latérales (12, 13) comprenant une zone de fixation (20, 21) proche de son bord distal, caractérisé en ce qu'au moins l'une des zones de fixation (20, 21) possède une surface anti-glissante (22, 23, 24), ladite surface anti-glissante comprenant un motif gaufré (37) formé d'environ 0,15 à environ 155 éléments en relief par cm² (environ 1 à environ 1000 éléments en relief par in²) de ladite surface anti-glissante.

2. Récipient suivant la revendication 1, dans lequel les profils de fermeture (17, 18) sont reliés chacun à la surface d'un ruban de fermeture fixé aux parois latérales respectives (12, 13).

3. Récipient suivant la revendication 2, dans lequel les rubans de fermeture sont placés parallèlement aux, et fixés près des, bords de l'extrémité refermable du récipient (10).

4. Récipient suivant la revendication 1, dans lequel le motif gaufré (37) a été produit en faisant passer la zone de fixation (20, 21) entre un cylindre non flexible de gaufrage (33) et un cylindre (32) à surface flexible.

5. Récipient suivant la revendication 1, dans lequel le motif gaufré (37) a été produit en faisant passer la zone de fixation (20, 21) entre une paire de cylindres adaptateurs (32, 35) ayant un motif gaufré (34) sur leur surface.

6. Récipient suivant l'une quelconque des revendications précédentes, dans lequel les éléments en relief ont une épaisseur d'environ 0,6 mm (0,025 inch).

7. Récipient suivant l'une quelconque des revendications précédentes, dans lequel le motif gaufré (37) est formé d'environ 1,5 à environ 15 éléments en relief par cm² (environ 10 à environ 100 éléments en relief par in²) de la surface anti-glissante (22, 23, 24).

8. Procédé de production d'un récipient (10) suivant l'une quelconque des revendications 1 à 7, ayant une extrémité refermable, des première et seconde parois latérales respectives (12, 13) et un dispositif d'attache de fermeture (16) comprenant des premier et second profils de fermeture (17, 18) placés sur lesdites parois latérales respectives et utilisables par emboîtement et séparation, l'un par rapport à l'autre, pour fermer et ouvrir ledit récipient, chacune desdites parois latérales (12, 13) ayant une zone de fixation (20, 21) proche de son bord distal, caractérisé en ce qu'il consiste à produire sur au moins une zone de fixation (20, 21) au moins une surface anti-glissante (22, 23, 24) sous forme d'un motif gaufré (37).

9. Procédé suivant la revendication 8, dans lequel la surface anti-glissante (22, 23, 24) est produite en faisant passer la zone de fixation (20, 21) entre un cylindre non flexible de gaufrage (33) et un cylindre (32) ayant une surface flexible.

10. Procédé suivant la revendication 8, dans lequel la surface anti-glissante (22, 23, 24) est produite en faisant passer la zone de fixation (20, 21) entre une paire de cylindres adaptateurs ayant un motif gaufré sur leur surface.

11. Procédé suivant la revendication 8, dans lequel la surface anti-glissante (22, 23, 24) est produite en faisant avancer des bandes de fermeture emboîtables ayant des parties profilées (17, 18) et des parties en forme de rebords (20, 21) jusqu'à au moins un cylindre rotatif de couchage, circonférentiellement rainuré, de sorte que les parties profilées non emboîtées desdites bandes de fermeture passent dans les rainures dudit cylindre de couchage, en extrudant un film de matière plastique fondue sur un cylindre rotatif de coulée ayant un motif gaufré sur au moins une partie de la surface dudit cylindre de coulée, ledit cylindre de coulée étant placé en face dudit cylindre de couchage de sorte que ledit film de matière plastique fondue se soude auxdites parties en forme de rebords desdites bandes de fermeture et que ledit film de matière plastique fondue soit produit avec un motif gaufré par application d'une pression entre ledit cylindre de couchage et ledit cylindre de coulée, et en refroidissant ledit film de matière plastique et les bandes de fermeture.

12. Procédé suivant la revendication 11, consistant à ajuster la pression appliquée entre le cylindre de couchage et le cylindre de coulée.

13. Procédé suivant la revendication 8, dans lequel la surface anti-glissante (22, 23, 24) est produite en extrudant les premier et second profils de fermeture, simultanément avec un film thermoplastique coulé sur un cylindre rotatif de coulée ayant un motif gaufré sur au moins une partie de la surface dudit cylindre de coulée, en associant lesdits profils de fermeture et ledit film thermoplastique de sorte que ledit film thermoplastique et lesdits profils de fermeture se soudent l'un à l'autre et que ledit film thermoplastique soit produit avec un motif gaufré, et en refroidissant ledit film thermoplastique et lesdits profils de fermeture.

14. Procédé suivant l'une quelconque des revendications 11 à 13, dans lequel le motif sur la surface du cylindre de coulée présente environ 0,15 à environ 155 éléments en relief par cm² (environ 1 à environ 1000 éléments en relief par in²).

15. Procédé de production d'un dispositif d'attache de fermeture (16) pour des récipients suivant l'une quelconque des revendications 1 à 7, sous forme d'un ruban de fermeture ayant des rebords de fixation (20, 21) caractérisé en ce qu'au moins l'une des zones de fixation (20, 21) est produite avec une surface anti-glissante (22, 23, 24) en faisant passer ledit rebord de fixation (20, 21) entre un cylindre non flexible de gaufrage (33) et un cylindre (32) ayant une surface flexible, ou bien entre une paire de cylindres adaptateurs ayant un motif gaufré sur leur surface.

16. Procédé de production d'un dispositif d'attache de fermeture (16) pour des récipients suivant l'une quelconque des revendications 1 à 7, sous forme d'un ruban de fermeture ayant des rebords de fixation (20, 21), caractérisé en ce qu'au moins l'une desdites zones de fixation (20, 21) est produite avec une surface anti-glissante (22, 23, 24) en extrudant un ruban servant de dispositif d'attache de fermeture ayant des éléments de fermeture emboîtables (18) et des rebords (48, 49) sur les deux côtés desdits éléments de fermeture, en mettant en contact au moins l'un des rebords (39), à l'état ramolli, avec une matière en particules, et en refroidissant ledit dispositif d'attache de fermeture afin que ladite matière en particules soit noyée dans au moins l'un des rebords de fixation (49).

FIG.1

FIG.2

1

FIG.3

FIG.3A

FIG.3B

FIG.3C

FIG.4

FIG.5

FIG.6

FIG.7

FIG.8

FIG.9

3